Europäisches Patentamt

European Patent Office

Office européen des brevets

(11) Publication number: **0 482 211 A1**

# EUROPEAN PATENT APPLICATION
## published in accordance with Art. 158(3) EPC

(21) Application number: 91908648.8

(22) Date of filing: 25.04.91

(86) International application number:
PCT/JP91/00556

(87) International publication number:
WO 91/17500 (14.11.91 91/26)

(51) Int. Cl.⁵: G06F 9/44, G05B 13/02

(30) Priority: 09.05.90 JP 117753/90

(43) Date of publication of application:
29.04.92 Bulletin 92/18

(84) Designated Contracting States:
AT BE CH DE DK ES FR GB GR IT LI LU NL SE

(71) Applicant: KABUSHIKI KAISHA ISEKI
KAIHATSU KOKI
31-6, Yoyogi 4-chome
Shibuya-ku, Tokyo 151(JP)

(72) Inventor: FUJIMORI, Isao, 5-38-14,
Akitsu-machi

Higashimurayama-shi
Tokyo 189(JP)
Inventor: MATSUMORI, Shigeru, 5-18-17,
Minamioi
Shinagawa-kuTokyo 140(JP)
Inventor: KANO, Takashi, 5-52-1,
Jindaijiminamicho
Chohu-shiTokyo 182(JP)

(74) Representative: Pacitti, Pierpaolo A.M.E. et al
Murgitroyd and Company Mitchell House 333
Bath Street
Glasgow G2 4ER Scotland(GB)

(54) METHOD OF FUZZY INFERENCE OPERATION AND OPERATION APPARATUS.

(57) A method and apparatus for operation of a consequent at the time of controlling various equipment by applying fuzzy theory. The operation method of the invention is characterized in that a membership function of a fuzzy set in the consequent is expressed by a triangle, the moment of rotation is calculated based on the product of a value on the abscissa of the center of gravity of the triangle and the length of the bottom side, the product of a validity degree obtained by calculating the antecedent and the moment of rotation is calculated and is added, the product of the validity degree and the length of the bottom side is calculated and is added, and the value to which is added the product of the validity degree and the moment of rotation is divided by the value to which is added the product of the validity degree and the length of the bottom side, and the thus obtained value is used as an operation amount. The operation apparatus of the invention preferably comprises a membership function storage unit for the consequent to store the data of length of bottom side of triangle and the data of position of the center of gravity that create a membership function of the consequent, a validity degree storage unit, a numerator operation unit which calculates and adds the product of the validity degree and the moment of rotation, a denominator operation unit which calculates and adds the product of the validity degree and the length of bottom side of a triangle, a division unit which divides the value calculated by the numerator operation unit by the value calculated by the denominator operation unit, and an output unit which outputs the value calculated by the division unit as an operation amount.

EP 0 482 211 A1

FIG. 1

FIG. 6

FIELD OF TECHNOLOGY

The present invention relates to the computation method and apparatus of fuzzy inference in fuzzy control and expert system etc., and more specifically relates to the method of computing an operational output in a consequent part and the apparatus for implementing such computation.

BACKGROUND TECHNOLOGY

In computation of the fuzzy inference, processing in an antecedent part of a given implication rule is carried out such that a membership function of the antecedent is subjected to an approximate comparison with observed information so as to determine a maximum value of the membership function according to the observed information to output the same in the form of a grade to a consequent part. On the other hand, processing in the consequent part is carried out such that a consequent membership function corresponding to the antecedent membership function is subjected to truncation by the grade obtained in the antecedent processing. This truncation is effected for all of the involved implication rules to produce waveforms or geometric figures indicative of inference results, and the waveforms are subjected to composition processing to calculate a barycenter value of a composite waveform. The thus obtained barycenter value is outputted as an operational output.

A min method (fuzzy logic product method) or an algebratic product method can be used to truncate the consequent membership function by the grade value obtained from the antecedent processing. Further, a max method (fuzzy logic summation method) or a summation method can be used to effect composition of the inference results obtained from the truncation with respect to all of the involved implication rules.

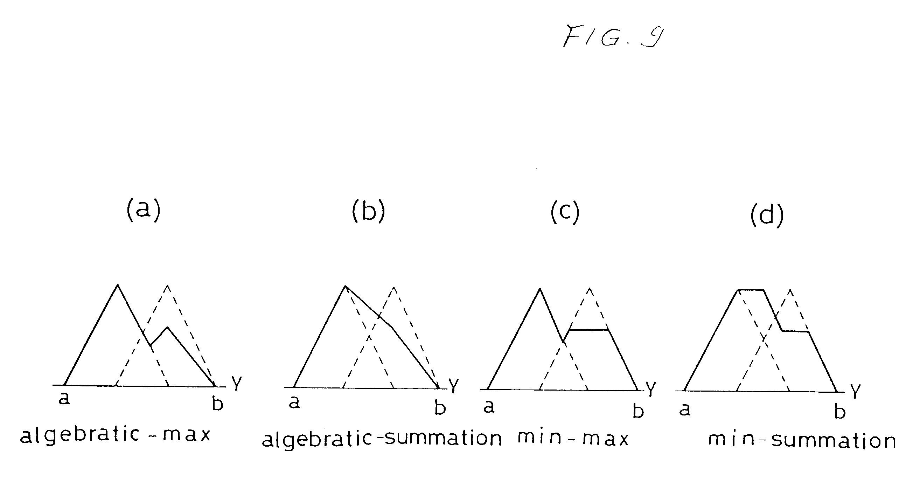

Figs. 9(a)-9(d) illustrate the above mentioned truncation method and composition method. For example, a fuzzy group of the consequent part includes two membership functions in the form of triangles or chevrons which partly overlap with each other on Y-axis. In addition, the rightward triangle of the membership function is truncated by a given grade value of, for example, 60%, according to different methods to produce different composite waveforms or figures. The dotted line shows a waveform of the membership functions prior to the truncation and composition processing, and the solid line shows the waveform indicative of results of the inference.

The thus obtained composite waveform is subjected to defuzzification processing to calculate an operational output value such that the composite waveform is integrated in terms of the Y-axis through an interval a-b to calculate a barycenter value of the composite waveform on the Y-axis. The thus obtained barycenter value is outputted as a resultant operational amount.

In case of carrying out the integration operation by an analog processor, a complicated design of a processing circuit may be needed. On the other hand, in case of using a digital processor, a memory device is provided to store dot sequence data (discrete data) along a curve of the waveform and then the stored data is retrieved to effect approximate computation, thereby disadvantageously requiring a great capacity of the memory device and prolonging a processing time.

In view of the above noted drawbacks, there has been proposed a sophisticated prior art disclosed, for example, in Japanese Patent laid-open publication No. 113734/1988. This prior art utilizes algebratic logic product method/max method as shown in Fig. 9(a). The waveform of the inference results is divided into $n+1$ number of sections between a pair of top vertices of the adjacent triangles, and the integration operation is carried out for the membership functions truncated each section to determine the barycenter value. However, this prior art still requires complicated operation procedure and relatively long operation time.

DISCLOSURE OF THE INVENTION

A first object of the present invention is to provide a fuzzy inference computation method effective to reduce operation time. For this, the inventive method relates to a fuzzy inference computation method of implementing the consequent operation based on grades obtained by carrying out the antecedent operation according to a given implication or control rule. A fuzzy group in the consequent part includes n number of membership functions represented, respectively, in the form of triangles $B_1$-$B_n$. Each moment $M_1$-$M_n$ is individually calculated for each triangle $B_1$-$B_n$ in terms of the product of a horizontal coordinate value $G_1$-$G_n$ of each triangle barycenter and a length $W_1$-$W_n$ of each triangle bottom edge. Then, each of other products $\alpha_1 \cdot M_1$-$\alpha_n \cdot M_n$ is calculated between each of grades $\alpha_1$-$\alpha_n$ obtained by the antecedent operation with respect to individual antecedent membership functions corresponding to the consequent membership functions ($B_1$-$B_n$) and each of the corresponding moments $M_1$-$M_n$. The calculated products are summed up.

3

Further, each of products $\alpha_1 \cdot W_1 - \alpha_n \cdot W_n$ is calculated between each of grades $\alpha_1 - \alpha_n$ and each of bottom edge lengths $W_1 - W_n$, and the calculated products $\alpha_1 \cdot W_1 - \alpha_n \cdot W_n$ are summed up. Lastly, the summed value of the first products of the grades and the moments is divided by the second products of the grades and the bottom edge lengths to determine an operational output value. By such fuzzy inference computation method, defuzzification can be effectively carried out to produce a definite operational output.

Namely, the triangles $B_1 - B_n$ are determined for the membership functions of a fuzzy group associated to outputs described in a consequent part of the implication or control rules, and these triangles $B_1 - B_n$ are arranged or aligned along the horizontal Y-axis according to the control rules, hence the bottom edge lengths $W_1 - W_n$ and the barycenter values $G_1 - G_n$ on the Y-axis are uniquely determined for each of the traingles $B_1 - B_n$. Even after truncating the consequent membership functions in the form of triangles $B_1 - B_n$ by the grades $\alpha_1 - \alpha_n$ fed from the antecedent part, the truncated triangles $B_1' - B_n'$ have the unchanged bottom edge lengths and the unchanged barycenter positions on the Y-axis. Further, areas of the truncated triangles $B_1' - B_n'$ can be readily calculated by using the bottom edge lengths $W_1 - W_n$ of the original triangles $B_1 - B_n$ and the grades $\alpha_1 - \alpha_n$. Consequently, each moment is obtained in terms of products of the areas of the truncated triangels $B_1' - B_n'$ and the corresponding barycenter Y-coordinate values, and the obtained moments are summed up. The summed amount is divided by the other summed amount of areas of the triangles $B_1' - B_n'$ to calculate a composite barycenter value G. Lastly, this barycenter value G is outputted as an optimum operational amount $Y_0$.

In this computation, the operational amount $Y_0$ is calculated while an overlapping portion of adjacent triangles are being added. Therefore, this computation is to effect operation according to the algebraic product method/max method shown in Fig. 9(a), while to resultingly effect operation according to the algebraic product method/summation method shown in Fig. 9(b).

According to the above described fuzzy inference computation method, respective triangles are given to determine n number of the membership functions associated to outputs of the consequent part, and concurrently the barycenter position and the bottom edge length of each triangle are uniquely set. Based on these parameters, a moment of each triangle is calculated, and a numerator is given in the form of the summed amount of products of each moment and each corresponding grade obtained by the antecedent operation. In turn, a denominator is given in the form of a summed amount of products of each triangle bottom edge length and each corresponding grade. The numerator is divided by the denominator to calculate the operational output amount. Therefore, it would not be necessary to truncate a consequent membership function by a given grade and thereafter to integrally operate the truncated membership functions to calculate a composite barycenter, as in the prior art. Thus, operating time can be reduced in the defuzzification processing.

A second object of the present invention is to provide a computation apparatus for implementing the above descirbed fuzzy inference computation scheme. For this, the inventive apparatus of fuzzy inference computation operates to effect the consequent processing based on grades obtained by the antecedent processing of given implication rules. The apparatus is comprised of a consequent membership function memomry unit for memorizing bottom edge length data and barycenter position data, or bottom edge length data and moment data, or top vertex position data, of n number of triangles which define consequent membership functions, a grade memory unit for memorizing n number of grades obtained by the antecedent operation, a numerator calculation unit for calculating products of each grade and each corresponding moment according to the data memorized in the grade memory unit and the consequent membership function memory unit and for summing up the products to determine a numerator, a denominator calcutation unit for calculating products of each grade and each corresponding triangle bottom edge length according to the data memorized in the grade memory unit and the consequent membership function memory unit and for summing up the products to determine a denominator, and a dividing operation unit for dividing the numerator by the denominator to calculate a quotient value, and an output unit for producing an operational output according to the calculated quotient value.

The above described fuzzy inference computation apparatus can quite easily implement the inventive fuzzy inference computation scheme. Namely, the consequent membership function memory unit is stored with various data of the n number of the triangles, in the form of triangle bottom edge length data and barycenter position data, or triangle bottom edge length data and moment data, or triangle top vertex position data, while the grade memory unit is stored with grade data obtained by carrying out the antecedent operation. The numerator calculation unit operates to calculate the first products of each grade and each moment according to the stored grade data and the stored corresponding data of the triangle and to sum up the first products to calculate the numerator. Meanwhile, the denominator calculation unit operates to calculate second products of each grade and each corresponding triangle bottom edge length according to the stored grade data and the stored corresponding triangle data and to sum up the second products to calculate the denominator. Lastly, the dividing operation unit operates to divide the numerator by the denominator to calculate a composite barycenter, and the output unit operates to produce an operational amount according to the calculated results. Accordingly, there would not be needed a complicated analog processor or a memory for storing a dot sequence data as in the prior art, thereby reducing a production cost.

BRIEF DESCRIPTION OF THE DRAWINGS

Fig. 1 is an illustrative diagram showing membership functions of a fuzzy group in a consequent part of implication or control rules;

Fig. 2 is an illustrative diagram showing truncation operation of the Fig. 1 membership functions by grades obtained through an antecedent operation;

Fig. 3 is an illustrative diagram showing membership functions of an antecedent part, adopted to effect a directional correction or adjustment in a tunnel excavator;

Fig. 4 is an illustrative diagram showing membership functions of a consequent part corresponding to the Fig. 3 antecedent membership functions;

Fig. 5(a)-5(d) are diagrams showing barycenter positions of triangles in the consequent part;

Fig. 6 is a structural block diagram;

Figs. 7(a)-7(c) are illustrative diagrams showing truncation of triangles representative of the consequent membership functions by given grades;

Fig. 8 is a graph showing comparison between the operational amount obtained by the inventive computation method and other operational amounts obtained by the conventional computaion methods; and

Figs. 9(a)-9(d) are illustrative diagrams showing various truncation and composition methods.

BEST MODE OF PRACTICING THE INVENTION

Hereinafter, the detailed description is given for an example of the fuzzy inference computation method applied with the above mentioned basic scheme and one embodiment of the computation apparatus in conjunction with the drawings.

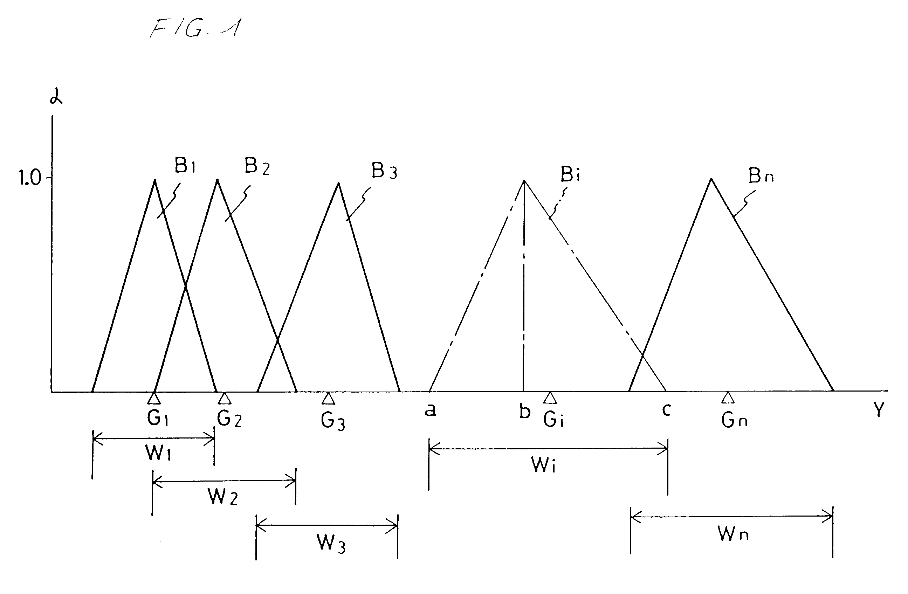

Firstly, the detailed description is given for the fuzzy inference computation method. As shown in Fig. 1, membership functions of a fuzzy group associated with outputs described in a consequent part of given implication rules are represented by triangles $B_1$-$B_n$ arranged along a Y-axis. Position and shape of these triangles $B_1$-$B_n$ are uniquely determined with respect to the Y-axis. Namely, the triangles $B_1$-$B_n$ have the same height and uniquely determined respective bottom edge lengths $W_1$-$W_n$. In a given triangle $B_i$, when three vertices of the triangle $B_i$ have Y-coordinate values a, b and c, respectively, the bottom edge length $W_i$ is determined by $W_i = c\text{-}b$. Further, a Y-coordinate value $G_i$ of a barycenter position of the triangle $B_i$ is calculated according to the following simple algebraic relation: $G_i = (a + b + c)/3$.

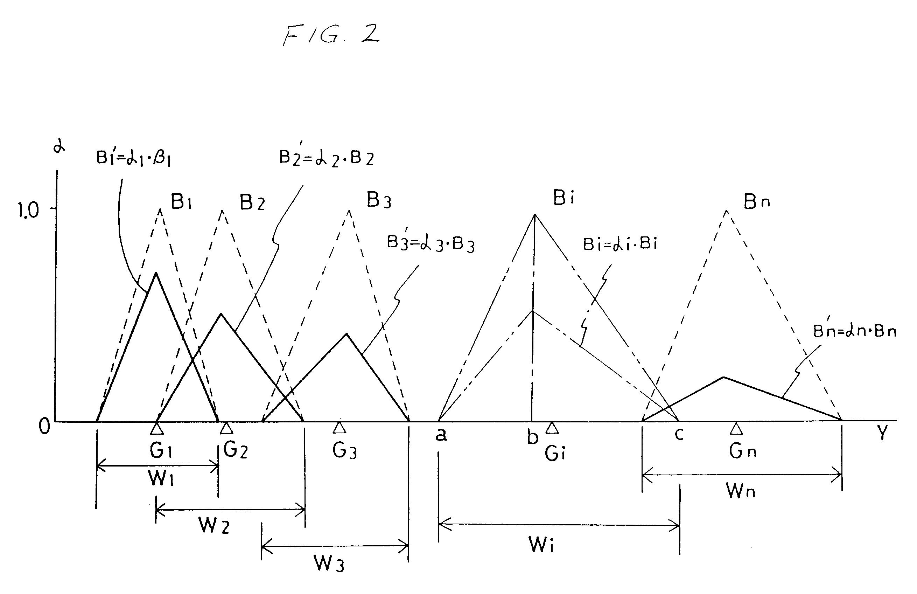

On the other hand, when particular observed amounts are inputted into the antecedent part, the antecedent operation according to the control rules is carried out to produce grades $\alpha_1$-$\alpha_n$. The triangles $B_1$-$B_n$ are truncated by the algebraic product operation of the corresponding grades $\alpha_1$-$\alpha_n$ to produce triangles $B_1'$-$B_n'$ as shown in Fig. 2. As understood from the comparison between the triangles $B_i$ and $B_i'$, the bottom edge $W_i$ is commonly shared and the Y-coordinate values of three vertices are not changed. Therefore, the Y-coordinate value of the barycenter of the triangle $B_i'$ is identical to that of the original triangle $B_i$. Namely, the position and shape of the triangles $B_1$-$B_n$ are fixed with respect to the Y-axis when the consequent membership functions are determined. Further, the Y-coordinate values of the barycenter positions of the respective triangles $B_1'$-$B_n'$ are identical to the Y-coordinate values $G_1$-$G_n$ of the barycenter positions of the original triangles $B_1$-$B_n$ prior to the truncation. Further, when the position and shape of the triangles $B_1$-$B_n$ is fixed with respect to the Y-axis, the Y-coordinate values $G_1$-$G_n$ of the barycenters of the triangles $B_1$-$B_n$ are readily calculated according to the above indicated relation.

With using the thus obtained barycenter values $G_1$-$G_n$ of the triangles $B_1$-$B_n$, each moment is calculated for the respective triangles $B_1'$-$B_n'$ which are indicative of inference results of the consequent membership functions for outputs of operational amount while using the area data of triangles $B_1'$-$B_n'$ as weight, so as to obtain a composite moment $Y_0$:

$$Y_0 = \{G_1 \bullet \alpha_1 \bullet W_1 + \text{---} + G_i \bullet \alpha_i \bullet W_i + \text{---} + G_n \bullet \alpha_n \bullet W_n)/2\} / \{\alpha_1 \bullet W_1 + \text{---} + \alpha_i \bullet W_i + \text{---} + \alpha_n \bullet W_n )/2\} .$$

Since each moment is expressed by $M_1 = G_1 \cdot W_1$, ---, $M_i = G_i \cdot W_i$, ---, $M_n = G_n \cdot W_n$, the composite moment $Y_0$ is represented by:

$$Y_0 = \left( \sum_{i=1}^{n} M_i \cdot \alpha_i \right) \Big/ \left( \sum_{i=1}^{n} W_i \cdot \alpha_i \right) --- \text{①}$$

The thus obtained value $Y_0$ indicates a composite barycenter position of the triangles $B_1'$-$B_n'$ on the Y-axis. The value $Y_0$ is outputted as an operational amount.

As described above, according to the inventive computation method, it is not necessary to integrally operate the membership functions as the results of inference, and is not necessary to memorize the membership functions in the form of a dot sequence data, thereby reducing computation time of the fuzzy inference. In the above listed relation, the moment $M_i$ and the bottom edge length $W_i$ are fixed in the form of crisp values when the consequent membership functions are determined for desired outputs.

The next description is given for one embodiment of the computation appratus in which the inventive computation scheme is applied to directional correction or adjustment operation of a tunnel excavator. The tunnel excavator is designed to dig a tunnel along a predetermined line. The tunnel excavator operates while progressively excavating a tunnel to measure a deviation of the actual advancing direction from a predetermined line so as to effect directional correction or adjustment according to the measured deviation. This directional corrective operation is of delicate nature, and may depend conventionally on individual operators in view of its fuzzy nature.

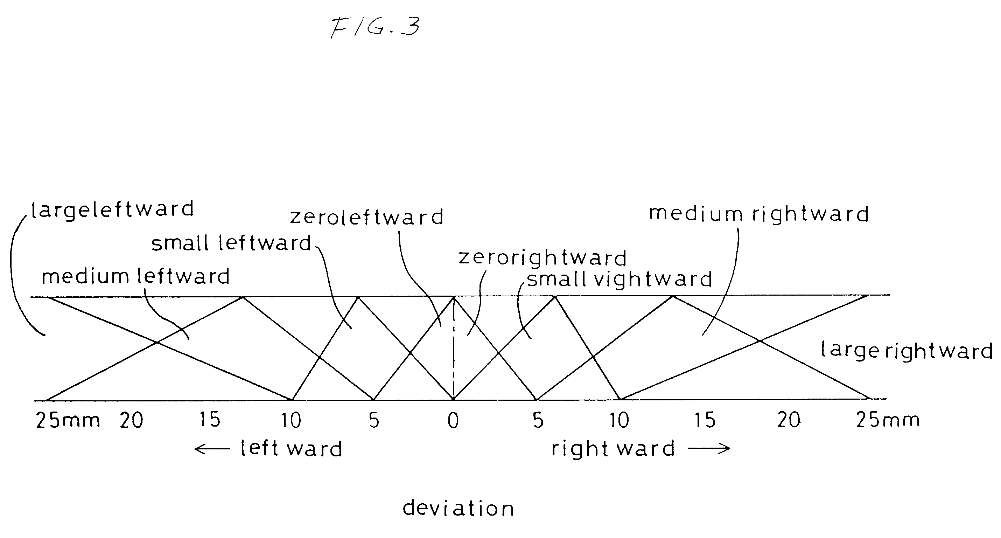

Fig. 3 shows membership functions of a antecedent part associated with a horizontal deviation from a preset or designed line of a tunnel. This deviation is monitored on a screen disposed inside the excavator, in the form of a distance (mm unit) between a laser beam spot and a target point indicative of the designed line of a tunnel.

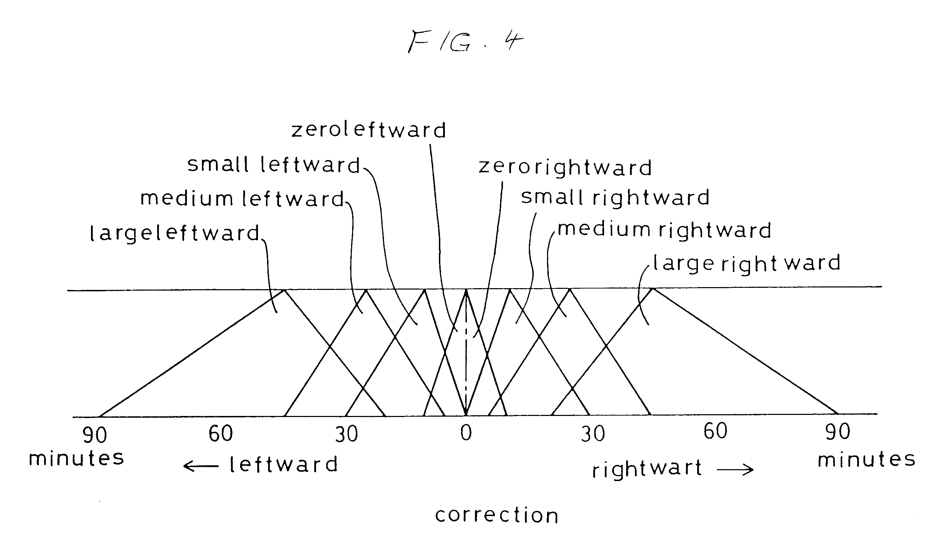

Fig. 4 shows membership functions of a consequent part corresponding to an antecedent fuzzy group of the deviation and being associated to horizontal directional correction amount. The consequent membership functions indicate a corrective direction (minute unit) of the excavator in response to a measured deviation on the screen. These membership functions are provisionally obtained according to statistical survey of veteran operators.

In this embodiment, the membership functions of the antecedent and consequent parts are respectively set symmetrical with respect to a zero center point. Therefore, when effecting defuzzification, absolute value of the inputted deviation is treated in the processing, and the processed absolute value is given with a sign of plus or minus in opposite relation to the inputted deviation so as to output an operational amount.

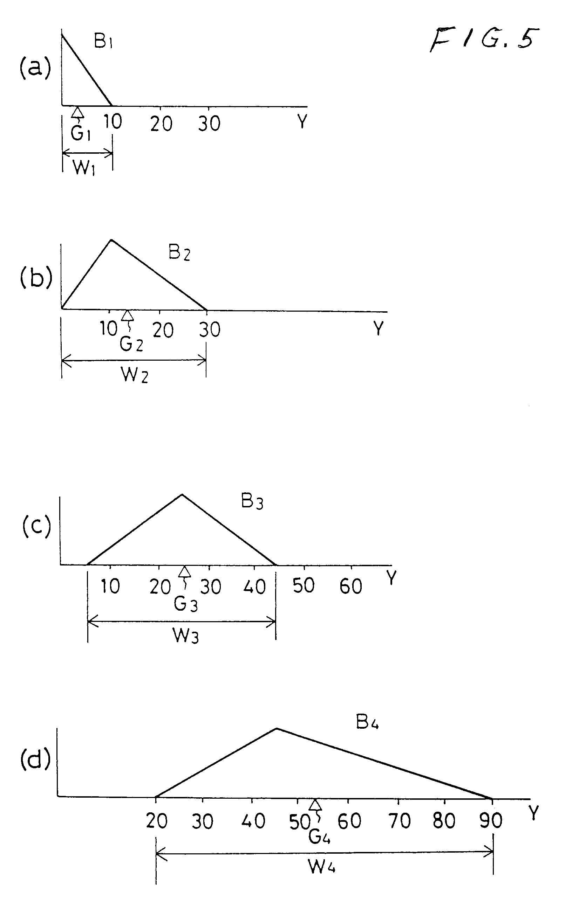

Figs. 5(a)-5(d) show respective ones of the triangles $B_1$-$B_4$, taken separately from each other. The triangles $B_1$-$B_4$ represent consequent membership functions indicative, respectively, of "rightward correction zero", "rightward correction small", "rightward correction medium", and "rightward correction large" with regard to rightward correction amount. The respective moments $M_1$-$M_4$ of the triangles $B_1$-$B_4$ are obtained in the form of products of the triangle barycenter positions $G_1$-$G_4$ on the Y-axis and the triangle bottom edge lengths $W_1$-$W_4$.

Namely, the triangle $B_1$ corresponds to a first membership function indicative of "rightward correction zero", and has a set of Y-coordinate values (0, 0, 10) at its three vertices. Therefore, the bottom edge length is given $W_1 = 10$. The Y-coordinate value of the barycenter postion $G_1$ is calculated to $G_1 = (0 + 0 + 10)/3 = 3.33$. Further, the moment $M_1$ is calculated to $M_1 = W_1 \cdot G_1 = 10 \times 3.33 = 33.3$.

The next triangle $B_2$ corresponds to a second membership function indicative of "rightward correction small", and has a set of Y-coordinate values (0, 10, 30) at its three vertices. Therefore, the triangle $B_2$ has the bottom edge length $W_2 = 30$, the barycenter position $G_2 = (0 + 10 + 30)/3 = 13.3$, and the moment $M_2 = 400$.

In similar manner, the third triangle B3 corresponding to a membership function indicative of "rightward correction medium" has the bottom edge length $W_3 = 40$, the barycenter position $G_3 = 25$ and the moment $M_3 = 1000$. Further, the last triangle $B_4$ representative of a membership function indicative of "rightward correction large" has the bottom edge length $W_4 = 70$, the barycenter position $G_4 = 51.6$, and the moment $M_4 = 3616.6$.

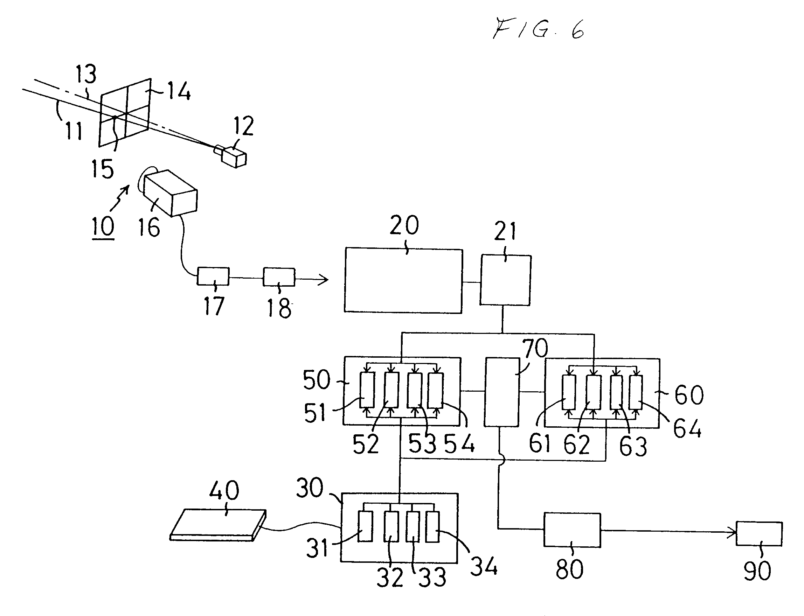

Fig. 6 is a block diagram showing a computation apparatus for computing an operational correction amount according to a deviation detected in a deviation monitor of the tunnel excavator. In the figure, the excavator is provided with a monitor unit 10. A laser oscillator 12 is set to emit a guide laser beam along a designed tunnel line 11. A target screen 14 is provided perpendicular to an advancing axis of the tunnel excavator, so that a laser beam spot 15 is formed on the target screen 14. This target screen 14 is monitored by a television camera 16, and the monitored image is analyzed by an image analyzer 17 to measure a deviation amount of the laser beam spot 15 from the center axis 13 of the excavator. Then a signal indicative of the deviation amount is inputted through an input device 18 into an antecedent part 20.

This antecedent part 20 operates according to the imputted signal to compute grades $\alpha$ to output the same, and has a memory unit for memorizing antecedent membership functions, a discriminating unit for discriminating plus/minus sign of the inputted signal, and an operating unit for computing grades $\alpha_1$-$\alpha_n$ for each of the membership functions according to the value of the inputted signal. In this embodiment, the membership functions are set symmetrically rightward and leftward with respect to a center zero point, hence there is provided four memories for memorizing and outputting the grades $\alpha_1$-$\alpha_4$, respectively. Namely, a grade memory unit 21 is provided to memorize the grades $\alpha_1$-$\alpha_4$ in fed from the antecedent part 20.

A consequent membership function memory unit 30 is provided to memorize data representative of the consequent membership functions shown in Fig. 4. This memory unit is comprised of n number of memories 31, 32, --- for memorizing data of the individual membership functions. In this embodiment, the memory unit is comprised of four memories 31-34 corresponding to the number of the consequent membership functions. Each of the memories 31-34 memories each of bottom edge length data $W_1$-$W_4$ and each of barycenter position data $G_1$-$G_4$ of the triangles $B_1$-$B_4$ shown in Figs. 5(a)-5(d), which represent the consequent membership functions. These data are inputted by means of a keyboard 40.

When setting the membership functions in the consequent part, once the triangles $B_1$-$B_4$ are determined, the bottom edge lengths $W_1$-$W_4$ and the barycenter positions $G_1$-$G_4$ are fixed uniquely. Therefore, the moments $M_1$-$M_4$ can be calculated provisionally for each of the triangles $B_1$-$B_4$. Therefore, the memories 31-34 may be otherwise set with the triangle bottom edge length data and the moment data.

Further, the bottom edge lengths $W_1$-$W_4$ and barycenter positions $G_1$-$G_4$ of the triangles $B_1$-$B_4$ can be calculated according to the Y-coordinate values of three vertices of the respective triangles $B_1$-$B_4$. Therefore, the memories 31-34 can be otherwise set with three vertices position data of the respective triangles $B_1$-$B_4$. However, in such case, an additional operating unit may be needed to compute the bottom edge lengths $W_1$-$W_4$ and the barycenter positions $G_1$-$G_4$ from the vertices position data.

There is provided a numerator calculation unit 50 comprised of individual processors 51-54 corresponding to number of the consequent membership functions. The unit 50 operates to retrieve the grade data $\alpha_1$-$\alpha_4$ in from the grade memory unit 21 and to retrieve the data of the triangles $B_1$-$B_4$ from the memory unit 30 such that the individual processors 51-54 compute the moments $M_1$-$M_4$ represented by the products of the corresponding bottom edge lengths $W_1$-$W_4$ and barycenter positions $G_1$-$G_4$ of the triangles $B_1$-$B_4$, and further the unit 50 calculates products of the moments $M_1$-$M_4$ and the grades $\alpha_1$-$\alpha_4$, and lastly the thus calculated product values are summed up to produce the numerator of the before-mentioned relation ① .

There is provided a denominator calculation unit 60 comprised of individual processors 61-64 corresponding to the number of the consequent membership functions. In manner similar to the numerator calculation unit 50, the unit 60 operates to calculate products of the bottom edge lengths $W_1$-$W_4$ of triangles $B_1$-$B_4$ and the grades $\alpha_1$-$\alpha_4$ and to sum up the products to thereby produce the denominator of the relation ① .

A dividing operation unit 70 operates to divide the numerator value by the denominator value. Namely, the unit 70 carries out the dividing calculation of the relation ① to compute a composite barycenter position of the cosequent membership functions truncated by the corresponding grades $\alpha_1$-$\alpha_4$.

An output unit 80 operates to output an operational amount according to the composite barycenter position data of the consequent membership functions, which is calculated by the dividing operation unit 70. In this embodiment, the above described sequential computation is carried out with using absolute values. Thus, the output unit 80 feeds to a driving unit 90 of the excavator, an operational output having a plus or minus sign in opposite relation to the sign of the inputted deviation data. In this regard, the tunnel excavator is controlled according to the following implication or control rules:
If deviation = zero leftward/rightward, then correction = zero rightward/leftward.
If deviation = small leftward/rightward, then correction = small rightward/leftward.
If deviation = medium leftward/rightward, then correction = medium rightward/leftward.
If deviation = large leftward/rightward, then correction = large rightward/leftward.

In the directional correction of the tunnel excavator, the deviation amount measured by the monitor unit 10 is once sample-and-held at a given cycle, and then inputted into the antecedent part 20. The antecedent part 20 operates according to the inputted deviation amount for calculating the grades $\alpha_1$-$\alpha_4$ of the

respective membership functions shown in Fig. 3. The consequent part operates based on these grades $\alpha_1$-$\alpha_4$ for truncating the output membership functions shown in Fig. 4, and then carries out defuzzification of the truncated membership functions to compute an output value according to the observed input value.

The detailed description is given for the defuzzification processing in the above described sequential operation each case that the deviation amount observed in the monitor unit 10 is 2 mm, 7 mm or 12 mm. Firstly, the description is given for computation of the operation output, i.e., correction amount in case that the observed deviation is 2 mm leftward. In this case, the respective grades $\alpha$ are calculated for the antecedent membership functions (Fig. 3), such that the grade $\alpha_1$ is 0.6 for the first membership function representative of "leftward deviation zero" and the grade $\alpha_2$ is 0.3 for the second membership function representative of "leftward deviation small".

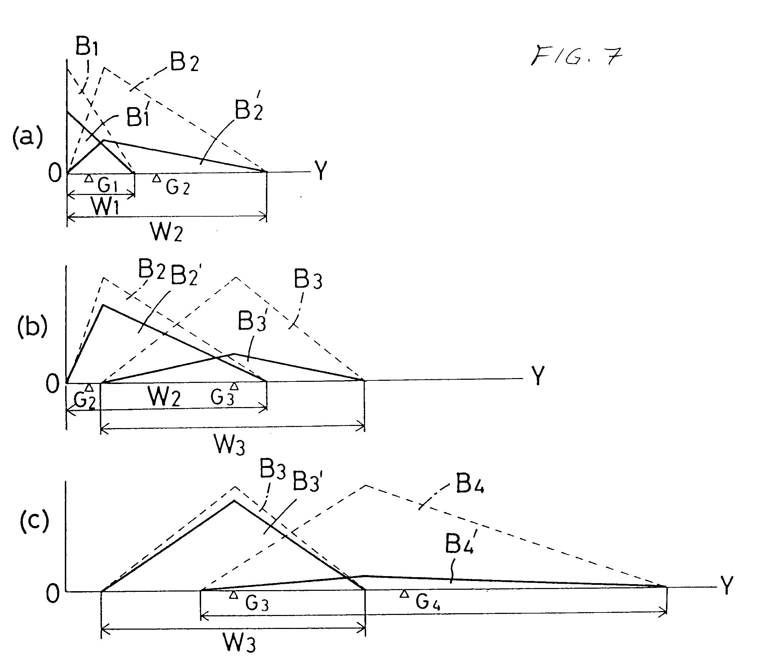

Next, the triangles $B_1$ and $B_2$ (Fig. 4) indicative of the corresponding consequent membership functions representative of "rightward correction zero" and "rightward correction small" are truncated by the respective grades $\alpha_1 = 0.6$ and $\alpha_2 = 0.3$ to obtain the truncated triangles $B_1'$ and $B_2'$ as shown in Fig. 7(a).

Further, as recognized from Fig. 5(a), the original triangle $B_1$ has the bottom edge length $W_1 = 10$, the barycenter position $G_1 = 3.33$ and the moment $M_1 = 33.3$. Also, as recognized from Fig. 5(b), the original triangle $B_2$ has the bottom edge length $W_2 = 30$, the barycenter position $G_2 = 13.3$ and the moment $M_2 = 400$.

Accordingly, the numerator calculation unit 50 carries out the following operation: $M_1 \cdot \alpha_1 + M_2 \cdot \alpha_2 = 33.3 \times 0.6 + 400 \times 0.3 = 139.98$. On the other hand, the denominator calculation unit 60 carries out the following operation: $W_1 \cdot \alpha_1 + W_2 \cdot \alpha_2 = 10 \times 0.6 + 30 \times 0.3 = 15$. Then, the dividing operation unit 70 effects the division of the numerator value calculated in the numerator calcutation unit 50 by the denominator value calculated in the denominator calculation unit 60 to produce a quatient value of $139.98 \div 15 = 9.583$ (minutes). This value 9.583 indicates an absolute amount of directional correction for the deviation 2 mm observed in the monitor unit 10 of the tunnel excavator. This absolute value is signed plus or minus according to the deviation direction so as to produce an operational output effective to correct for the deviation.

In similar manner, in case that the deviation is detected to 7 mm by the monitor unit 10, the antecedent part produces the processing results of the grade $\alpha_2 = 0.75$ and grade $\alpha_3 = 0.25$. Based on the grades $\alpha_2$ and $\alpha_3$, the truncation is carried out using the grade data $\alpha_2 = 0.75$ and $\alpha_3 = 0.25$ for the respective triangles $B_2$ and $B_3$ (Fig. 4) corresponding to the consequent membership functions indicative of "rightward correction small" and "rightward correction medium", to thereby obtain the triangles $B_2'$ and $B_3'$ shown in Fig. 7(b). With using data of the triangles $B_2'$ and $B_3'$, the numerator calculation unit 50, denominator calculation unit 60 and dividing operation unit 70 are operated to produce an optimum operational output of 16.923.

Further, in similar manner, in case that the deviation is 12 mm, there are obtained triangles $B_3'$ and $B_4'$, as shown in Fig. 7(c), corresponding to "rightward correction medium" and "rightward correction large". Accordingly, the absolute value of the operational output is computed to 31.321.

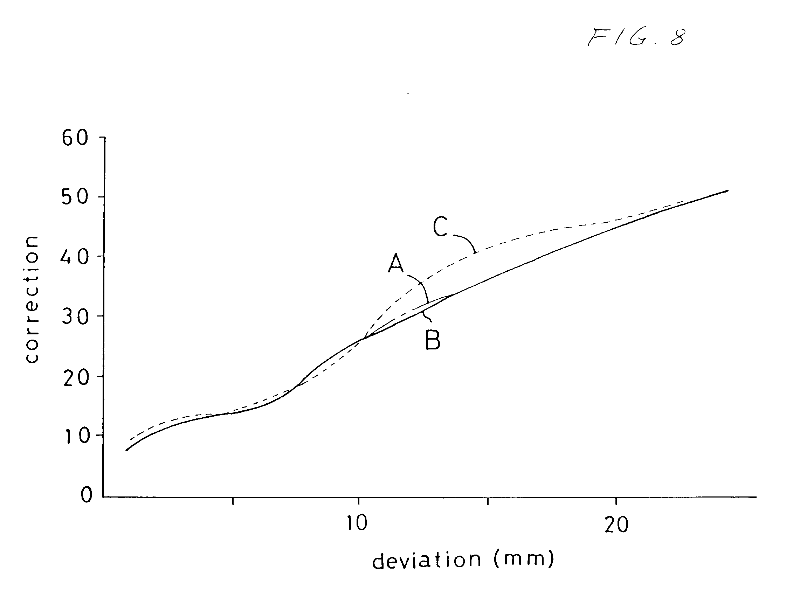

Fig. 8 is a graph showing operational correction amount computed in a deviation range of 1 mm - 25 mm according to the inventive and conventional methods for comparison purpose. In the graph, the curve A indicates the operational amount calculated according to the inventive computation method, the curve B indicates the operational amount calculated by truncation and integration using the conventional algebraic product method/summation method, and the curve C indicates the operational amount calculated by truncation and integration using the other conventional min method/max method. As understood from the graph, the output value computed according to the inventive relation ① is identical to results obtained by processing a waveform produced according to the algebraic method/summation method shown in Fig. 9(b), through the conventional integrating operation.

INDUSTRIAL APPLICABILITY

As described above, according to the inventive fuzzy inference computation method, n number of the membership functions are associated to outputs of the consequent part and are represented, respectively, by triangles such that barycenter positions and bottom edge lengths of the triangles are uniquely fixed concurrently with the setting of the membership functions. By this, moment of each triangle is calculated, and products of the moments and the corresponding grades obtained by the antecedent processing are summed up to determine a numerator. The other products of the triangle bottom edge lengths and the corresponding grades are summed up to determine a denominator. Dividing operation of these values is effected to compute an operational output value. Further, the disclosed fuzzy inference computation apparatus can efficiently execute the inventive fuzzy inference computation method or scheme. Thus, the invention can be applied effectively to various control apparatuses using fuzzy theory.

**Claims**

1. A fuzzy inference computation method of effecting an operation of a consequent part based on grades obtained by carrying out another operation of an antecedent part of given implication rules, the method comprising the steps of:

setting n number of membership functions of a fuzzy group of the consequent part, in the form of triangles ($B_1$-$B_n$);

calculating moments ($M_1$-$M_n$) of the respective triangles ($B_1$-$B_n$) represented by products of triangle barycenter position values ($G_1$-$G_n$) on a horizontal axis and triangle bottom edge lengths ($W_1$-$W_n$);

calculating first products ($\alpha_1 \cdot M_1$-$\alpha_n \cdot M_n$) of the moments ($M_1$-$M_n$) and the corresponding grades ($\alpha_1$-$\alpha_n$) which are obtained by the operation of the antecedent part and which correspond to respective ones of the membership functions in the consequent part, and then summing up the first products;

further, computing second products ($\alpha_1 \cdot W_1$-$\alpha_n \cdot W_n$) of the grades ($\alpha_1$-$\alpha_n$) and the corresponding triangle bottom edge lengths ($W_1$-$W_n$), and then summing up the second products; and

dividing the summed amount of the first products of the grades and the moments by the other summed amount of the second products of the grades and the bottom edge lengths to produce an operational output.

2. A fuzzy inference computation method according to claim 1; wherein the membership functions of a fuzzy group in the consequent part are represented by n number of triangles ($B_1$-$B_n$), and when calculating the moment ($M_i$) of the triangle $B_i$, the barycenter position value ($G_i$) of the triangle ($B_i$) on the horizontal axis is calculated to $G_i = (a+b+c)/3$ and its bottom edge length $W_i$ is calculated to $W_i = c\text{-}a$ where respective vertices ($B_i a$, $B_i b$, $B_i c$) of the triangle ($B_i$) have coordinate values of $B_i a$ (a, 0), $B_i b$(b, 1), $B_i c$ (c, 0) (a<b<c).

3. A fuzzy inference computation apparatus for effecting an operation of a consequent part based on grades obtained by executing another operation of an antecedent part of given implication rules, the apparatus comprising:

a consequent membership function memory unit for memorizing individual data of n number of triangles representative of membership functions of the consequent part, in the form of triangle bottom edge length data and triangle barycenter position data, or in the form of triangle bottom edge length data and triangle moment data, or in the form of triangle vertices position data;

a grade memory unit for memorizing n number of grade data obtained by executing the operation of the antecedent part;

a numerator calculation unit for calculating products of each grade and each corresponding triangle moment according to the grade data memorized in the grade memory unit and the data of corresponding triangle memorized in the consequent membership function memory unit, and for summing up these calculated products to determine a numerator;

a denominator calculation unit for calculating products of each grade and each corresponding triangle bottom edge length according to the grade data memorized in the grade memory unit and the data of corresponding triangle memorized in the consequent membership function memory unit, and for summing up these calculated products to determine a denominator;

a dividing operation unit for dividing a value of the numerator calculated in the numerator calculation unit by another value of the denominator calculated in the denominator calculation unit; and

an output unit for outputting an operational amount according to divided results calculated by the dividing operation unit.

9

FIG. 1

EP 0 482 211 A1

FIG. 2

EP 0 482 211 A1

FIG. 3

FIG. 4

zero leftward
small leftward
medium leftward
zero rightward
large leftward
small rightward
medium rightward
large rightward

90        60        30        0        30        60        90
minutes                                              minutes
← leftward                          rightwart →

correction

EP 0 482 211 A1

FIG.5

FIG. 6

FIG. 7

FIG. 8

EP 0 482 211 A1

FIG. 9

(a) algebraic-max

(b) algebraic-summation

(c) min-max

(d) min-summation

# INTERNATIONAL SEARCH REPORT

International Application No PCT/JP91/00556

| I. CLASSIFICATION OF SUBJECT MATTER (if several classification symbols apply, indicate all) [6] |
|---|

According to International Patent Classification (IPC) or to both National Classification and IPC

Int. Cl$^5$  G06F9/44, G05B13/02

## II. FIELDS SEARCHED

| Minimum Documentation Searched [7] | |
|---|---|
| Classification System | Classification Symbols |
| IPC | G06F9/44, G05B13/02 |

| Documentation Searched other than Minimum Documentation<br>to the Extent that such Documents are Included in the Fields Searched [8] | |
|---|---|
| Jitsuyo Shinan Koho | 1971 - 1991 |
| Kokai Jitsuyo Shinan Koho | 1971 - 1991 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| P | JP, A, 2-176935 (Olympus Optical Co., Ltd.),<br>July 10, 1990 (10. 07. 90),<br>Pages 16 to 18, Figs. 41, 42<br>(Family: none) | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 12, 1991 (12. 07. 91) | July 29, 1991 (29. 07. 91) |

| International Searching Authority | Signature of Authorized Officer |
|---|---|
| Japanese Patent Office | |

Form PCT/ISA/210 (second sheet) (January 1985)